# EUROPÄISCHE PATENTSCHRIFT

(11) **EP 0 745 511 B1**
(45) Veröffentlichungstag und Bekanntmachung des Hinweises auf die Patenterteilung: **02.08.2000**
(21) Anmeldenummer: 96107643.7
(22) Anmeldetag: 14.05.1996
(51) Int. Cl.: B60Q 1/068

(54) **Beleuchtungseinrichtung für Fahrzeuge**
Lighting device for vehicle
Dispositif d'éclairage pour véhicule

(30) Priorität: 30.05.1995 DE 19519653
(43) Veröffentlichungstag der Anmeldung: 04.12.1996
(73) Patentinhaber: ROBERT BOSCH GMBH, 70442 Stuttgart (DE)
(72) Erfinder: Dobler, Karl-Otto, Techniker, 72768 Reutlingen (DE); Fischer, Jan, Dipl.-Ing., 72108 Kiebingen (DE)

(56) Entgegenhaltungen:
- EP-A- 0 489 388
- EP-A- 0 578 552
- DE-B- 1 172 555
- US-A- 3 735 121

## Beschreibung

### Stand der Technik

Die Erfindung geht aus von einer Beleuchtungseinrichtung für Fahrzeuge nach der Gattung des Anspruchs 1.

Eine solche Beleuchtungseinrichtung ist durch die DE 30 30 427 A1 bekannt. Diese Beleuchtungseinrichtung ist als Scheinwerfer ausgebildet und weist ein Gehäuseteil auf, von dem wenigstens ein Reflektor und wenigstens eine Lichtquelle zumindest teilweise umgeben sind. Das Gehäuseteil weist an seinem Vorderende eine Lichtaustrittsöffnung auf, die mit einer lichtdurchlässigen Abdeckscheibe verschlossen ist. Das Gehäuseteil ist an einem Frontteil des Fahrzeugs befestigbar und weist der Abdeckscheibe gegenüberliegend eine Rückwand mit einer Öffnung auf, die mit einem separaten Verschlußteil verschließbar ist. Durch das Gehäuseteil, das Verschlußteil sowie die Abdeckscheibe ist ein abgeschlossener Innenraum begrenzt, in dem der Reflektor und die Lichtquelle angeordnet sind und damit gegen Schmutz und Feuchtigkeit geschützt sind. Das Gehäuseteil mit dem Verschlußteil erfordert einen großen Stoffeinsatz zu dessen Herstellung und einen großen Einbauraum am Fahrzeug, was vermieden werden sollte.

### Vorteile der Erfindung

Die erfindungsgemäße Beleuchtungseinrichtung für Fahrzeuge mit den Merkmalen des Anspruchs 1 hat demgegenüber den Vorteil, daß für das Gehäuseteil ein geringer Stoffeinsatz erforderlich ist, da dieses keine eigene Rückwand aufzuweisen braucht. Dabei ist auch bei Fertigungstoleranzen des Gehäuseteils und/oder des die Vertiefung aufweisenden Fahrzeugteils eine sichere Abdichtung des Innenraums erreicht, wobei durch die Verschiebbarkeit des Gehäuseteils in der Vertiefung Fertigungstoleranzen in Einschubrichtung des Gehäuseteils ausgeglichen werden und durch das elastisch verformbare Dichtelement Fertigungstoleranzen quer zur Einschubrichtung des Gehäuseteils ausgeglichen werden.

Vorteilhafte Ausgestaltungen und Weiterbildungen der erfindungsgemäßen Beleuchtungseinrichtung sind in den abhängigen Ansprüchen angegeben. Durch die Ausbildung gemäß Anspruch 5 kann das Dichtelement relativ große Fertigungstoleranzen quer zur Einschubrichtung des Gehäuseteils bei sicherer Abdichtung des Innenraums ausgleichen.

### Zeichnung

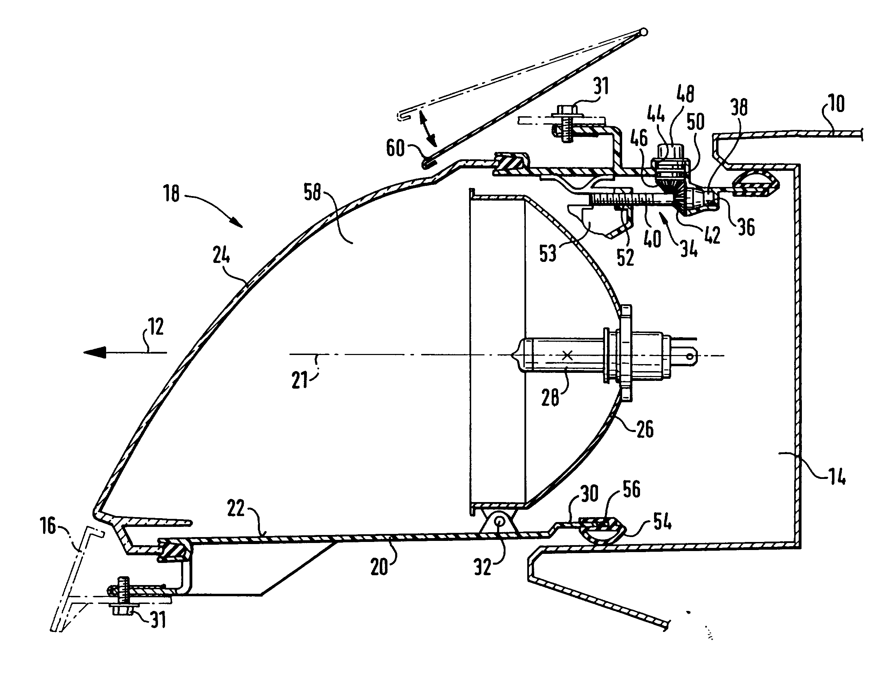

Ein Ausführungsbeispiel der Erfindung ist in der Zeichnung dargestellt und in der nachfolgenden Beschreibung näher erläutert. Die Figur zeigt eine an einem Fahrzeugteil angeordnete Beleuchtungseinrichtung in einem vertikalen Längsschnitt.

### Beschreibung des Ausführungsbeispiels

Von einem Fahrzeug, insbesondere einem Kraftfahrzeug, ist in der Figur ein vorderes Fahrzeugteil 10 dargestellt, das ein Teil der Karosserie des Fahrzeugs oder eines Trägers sein kann und aus Metall, beispielsweise Metallguß oder Blech, oder Kunststoff bestehen kann. Das Fahrzeugteil 10 weist an seiner in Fahrtrichtung 12 des Fahrzeugs weisenden Stirnseite wenigstens eine entgegen Fahrtrichtung 12 angeordnete topfförmige Vertiefung 14 auf. Die Vertiefung 14 ist an ihren Seitenwänden und an ihrem Boden geschlossen ausgebildet. Üblicherweise wird an den beiden seitlichen Randbereichen des Fahrzeugteils 10 jeweils eine Vertiefung 14 ausgebildet sein. Die Vertiefung 14 kann so ausgebildet sein, daß sich deren lichte Weite zu ihrem in Fahrtrichtung 12 weisenden vorderen Rand hin erweitert, beispielsweise konisch.

Am Fahrzeugteil 10 ist ein Frontteil 16 für das Fahrzeug befestigbar, das entgegen Fahrtrichtung 12 an das Fahrzeugteil 10 herangeschoben wird und mittels nicht dargestellter Befestigungselemente am Fahrzeugteil 10 befestigbar ist. Am Frontteil 16 ist wenigstens eine Beleuchtungseinrichtung 18 befestigt, beispielsweise in Form eines Scheinwerfers. Am Frontteil 16 können noch weitere Teile und Aggregate des Fahrzeugs angebracht sein. Üblicherweise wird in den beiden seitlichen Randbereichen des Frontteils 16 jeweils ein Scheinwerfer 18 befestigt sein. Der Scheinwerfer 18 weist ein rahmenartiges Gehäuseteil 20 auf, das an seinem in Fahrtrichtung 12 weisenden Vorderende eine Lichtaustrittsöffnung 22 aufweist, die mit einer lichtdurchlässigen Abdeckscheibe 24 aus Glas oder Kunststoff verschlossen ist. Das Gehäuseteil 20 kann im Querschnitt rund, rechteckig oder mit beliebiger anderer Form ausgebildet sein. Das Gehäuseteil 20 besteht vorzugsweise aus Kunststoff, kann jedoch auch aus anderem geeignetem Material bestehen, beispielsweise Blech oder Metallguß. Die Abdeckscheibe 24 kann glatt ausgebildet sein oder optisch wirksame Elemente aufweisen, durch die hindurchtretendes Licht abgelenkt wird. Die Abdeckscheibe 24 ist mit einem umlaufenden Rand am Vorderende des Gehäuseteils 20 befestigt, beispielsweise verklebt, oder mittels einer oder mehrerer Halteklammern oder durch eine Rastverbindung.

Am Gehäuseteil 20 ist wenigstens ein Reflektor 26 gelagert, der vom Gehäuseteil 20 teilweise umgeben ist. In den Reflektor 26 ist in dessen Scheitelbereich von der Rückseite her wenigstens eine Lichtquelle 28 eingesetzt, die eine Glühlampe oder eine Gasentladungslampe sein kann. Das Gehäuseteil 20 ist an seinem der Abdeckscheibe 24 gegenüberliegenden, entgegen Fahrtrichtung 12 weisenden Rückseite offen ausgebildet und weist einen die Öffnung an dessen Rückseite umgebenden umlaufenden Rand 30 auf. Der Rand 30 kann in einer zur Fahrtrichtung 12 senkrechten Ebene angeordnet sein, oder, wie in der Figur dargestellt, in einer bezüglich einer senkrechten Ebene geneigten Ebene. Der Rand 30 kann gegenüber dem weiter in Fahrtrichtung 12 angeordneten Bereich des Gehäuseteils 20 eine geringere lichte Weite aufweisen. Das Gehäuseteil 20 ist mittels einer oder mehrer Schrauben 31 am Frontteil 16 befestigt.

Der Reflektor 26 ist am Gehäuseteil 20 verstellbar gelagert und wenigstens um eine horizontal und etwa senkrecht zur Längsachse 21 des Gehäuseteils 20 verlaufende Achse 32 schwenkbar, die beispielsweise am unteren Randbereich des Reflektors 26 angeordnet ist. Für eine Verstellung des Reflektors 26 ist eine Verstelleinrichtung vorgesehen, die eine Verstellschraube 34 aufweist. Die Verstellschraube 34 weist einen in einer in Fahrtrichtung 12 offenen Sackbohrung 36 nahe der Rückseite des Gehäuseteils 20 drehbar gelagerten Zapfen 38 auf und einen in Fahrtrichtung 12 weisenden Gewindeschaft 40. Die Verstellschraube 34 ist etwa horizontal angeordnet und am Übergang von deren Zapfen 38 zu deren Gewindeschaft 40 ist ein mit seiner Verzahnung in Fahrtrichtung 12 weisendes Kegelrad 42 ausgebildet.

Das Gehäuseteil 20 weist an seiner Oberseite eine Öffnung 44 auf, die bezüglich dem Kegelrad 42 der Verstellschraube 34 in Fahrtrichtung 12 versetzt ist und in die von oben her ein Kegelrad 46 eingesetzt ist, das mit seiner Verzahnung in das Gehäuseteil 20 hineinragt und mit der Verzahnung des Kegelrads 42 der Verstellschraube 34 in Eingriff steht. Das Kegelrad 46 ist etwa rechtwinklig zur Verstellschraube 34 angeordnet und weist einen außerhalb des Gehäuseteils 20 angeordneten Betätigungsabschnitt 48 auf, der beispielsweise in Form eines Außen- oder Innensechskants ausgebildet sein kann oder in Form eines Quer- oder Kreuzschlitzes, so daß an diesem mittels eines geeigneten Werkzeugs angegriffen werden kann. Das Kegelrad 46 ist mittels eines auf seinen in das Gehäuseteil 20 ragenden Abschnitt aufgesteckten Sicherungselements 50, beispielsweise in Form eines Sicherungsrings, gegen Herausziehen gesichert. Der Gewindeschaft 40 der Verstellschraube 34 ist in ein Mutterteil 52 eingeschraubt, das an einem am Reflektor 26 befestigten Verstellelement 53 ausgebildet ist, das am Gehäuseteil 20 in Längsrichtung der Verstellschraube 34 verschiebbar, jedoch unverdrehbar geführt ist. Das Mutterteil 52 kann auch direkt am Reflektor 26 angeordnet und einstückig mit diesem ausgebildet sein. Bei einer Verdrehung des Kegelrads 46 wird entsprechend die Verstellschraube 34 verdreht und durch deren Gewindeverbindung mit dem Mutterteil 52 wird das Mutterteil 52 und über dieses der Reflektor 26 an seinem oberen Randbereich um die Achse 32 geschwenkt und dabei die Ausrichtung des vom Reflektor 26 reflektierten Lichtbündels in vertikaler Richtung verstellt. Der Reflektor 26 kann zusätzlich am Gehäuseteil 20 auch um eine vertikale Achse schwenkbar gelagert sein, wobei dann zur Schwenkung des Reflektors 26 um die vertikale Achse eine weitere Verstelleinrichtung vorgesehen ist, mit einem ebenfalls von außerhalb des Gehäuseteils 20 zugänglichen Betätigungselement.

Auf den Rand 30 des Gehäuseteils 20 ist von dessen Rückseite her ein umlaufendes Dichtelement 54 aufgeschoben, das vom Gehäuseteil 20 nach außen absteht. Das Dichtelement 54 weist dabei eine umlaufende Nut 56 auf, in die der Rand 30 des Gehäuseteils 20 eintaucht. Der nach außen abstehende Teil des Dichtelements 54 ist als ein Hohlprofil ausgebildet und ist nach außen konvex gekrümmt, so daß das Dichtelement 54 quer zur Längsachse 21 des Gehäuseteils 20 über einen weiten Bereich elastisch verformbar ist.

Nachfolgend werden die Montage des Scheinwerfers 18 sowie des Frontteils 16 am Fahrzeugteil 10 erläutert. Der Scheinwerfer 18 bzw. die beiden Scheinwerfer werden zunächst mit ihren Gehäuseteilen 20 am Frontteil 16 mittels der Schrauben 31 befestigt. Anschließend wird das Frontteil 16 entgegen Fahrtrichtung 12 an das Fahrzeugteil 10 herangeschoben. Dabei tritt der rückseitige Rand 30 jedes Gehäuseteils 20 mit dem daran angeordneten Dichtungselement 54 in die jeweilige Vertiefung 14 des Fahrzeugteils 10 ein. Der Rand 30 des Gehäuseteils 20 weist einen kleineren äußeren Querschnitt auf als der innere Querschnitt der Vertiefung 14, so daß zwischen dem äußeren Umfang des Rands 30 und dem inneren Umfang der Vertiefung 14 ein umlaufender Spalt verbleibt, der durch das Dichtungselement 54 ausgeglichen wird. Durch das Gehäuseteil 20, die Abdeckscheibe 24 sowie die Vertiefung 14 des Fahrzeugteils 10 wird somit ein abgeschlossener Innenraum 58 begrenzt, in dem der wenigstens eine Reflektor 26 und die Lichtquelle 28 angeordnet sind. Das Gehäuseteil 20 ist dabei in der Vertiefung 14 entlang seiner Einschubrichtung, das heißt in bzw. entgegen Fahrtrichtung 12, frei verschiebbar, wodurch Fertigungstoleranzen des Gehäuseteils 20, des Frontteils 16 und des Fahrzeugteils 10 entlang der Einschubrichtung 12 ausgeglichen werden und unabhängig von diesen das Gehäuseteil 20 mit seinem rückseitigen Rand 30 in die Vertiefung 14 eintaucht. Die Tiefe der Vertiefung 14 entlang der Einschubrichtung 12 des Gehäuseteils 20 ist dabei so bemessen, daß das Gehäuseteil 20 auch bei ungünstigen Fertigungstoleranzen mit seinem rückseitigen Rand 30 nicht am Boden der Vertiefung 14 zur Anlage kommt. Das Dichtelement 54 kommt mit seinem umlaufenden, radial von der Längsachse 21 des Gehäuseteils 20 wegweisenden äußeren Umfang am inneren Umfang der Vertiefung 14 zur Anlage und dichtet den Innenraum 58 ab. Durch die elastische Verformbarkeit des Dichtelements 54 in weiten Bereichen können Fertigungstoleranzen des Gehäuseteils 20, des Frontteils 16 sowie des Fahrzeugteils 10 quer zur Einschubrichtung 12 des Gehäuseteils 20 ausgeglichen werden und es wird unabhängig davon eine sichere Abdichtung des Innenraums 58 erreicht. Der Betätigungsabschnitt 48 des Kegelrads 46 zur Verstellung des Reflektors 26 ist außerhalb der Vertiefung 14 angeordnet und von oberhalb des Gehäuseteils 20 zugänglich.

Abweichend zum vorstehend Beschriebenen kann der Scheinwerfer 18 auch direkt am Fahrzeugteil 10 befestigbar sein, wobei die Ausbildung des Scheinwerfers 18 und des Fahrzeugteils 10 mit der Vertiefung 14 unverändert sind. Am Frontteil 16 oder am Fahrzeugteil 10 kann eine bewegliche Klappe 60 angeordnet sein, die beispielsweise ein Teil der Karosserie des Fahrzeugs ist. Durch die Klappe 60 wird ein zwischen dem Umfang des Scheinwerfers 18 und dem an diesen angrenzenden Frontteil 16 oder Fahrzeugteil 10 vorhandener Spalt zumindest teilweise verdeckt. Die Klappe 60 kann insbesondere schwenkbar sein zwischen einer in der Figur mit durchgezogenen Linien dargestellten Stellung, in der sie den Spalt verdeckt, und einer in der Figur mit gestrichelten Linien dargestellten weggeschwenkten Stellung, in der der Spalt offen ist. Bei weggeschwenkten Stellung der Klappe 60 ist der Scheinwerfer 18 montierbar bzw. demontierbar und es kann auch der Betätigungsabschnitt 48 des Kegelrads 46 zur Einstellung des Reflektors 26 von der Vorderseite des Fahrzeugs her zugänglich sein.

## Patentansprüche

1. Beleuchtungseinrichtung in einem Fahrzeug mit wenigstens einem Reflektor (26) und wenigstens einer Lichtquelle (28), die zumindest teilweise von einem Gehäuseteil (20) umgeben sind, das an seiner Vorderseite eine Lichtaustrittsöffnung (22) aufweist, die mit einer lichtdurchlässigen Abdeckscheibe (24) verschlossen ist, wobei das Gehäuseteil (20) an einem Frontteil (16) des Fahrzeugs befestigbar ist, dadurch gekennzeichnet, daß das Gehäuseteil (20) rahmenartig ausgebildet ist und an seiner der Abdeckscheibe (24) gegenüberliegenden Rückseite offen ausgebildet ist, daß ein Fahrzeugteil (10) eine topfförmige Vertiefung (14) aufweist, in die das Gehäuseteil (20) mit seinem rückseitigen Rand (30) einschiebbar ist und daß zwischen dem äußeren Umfang des Gehäuseteils (20) und dem inneren Umfang der Vertiefung (14) ein quer zur Einschubrichtung (12) des Gehäuseteils (20) elastisch verformbares Dichtelement (54) eingespannt ist, so daß ein durch die Abdeckscheibe (24), das Gehäuseteil (20) und die Vertiefung (14) begrenzter abgeschlossener Innenraum (58) gebildet ist, in dem der wenigstens eine Reflektor (26) und die wenigstens eine Lichtquelle (28) angeordnet sind.

2. Beleuchtungseinrichtung nach Anspruch 1, dadurch gekennzeichnet, daß das Dichtelement (54) auf den rückseitigen Rand (30) des Gehäuseteils (20) gesteckt ist.

3. Beleuchtungseinrichtung nach Anspruch 1 oder 2, dadurch gekennzeichnet, daß das Dichtelement (54) als ein Hohlprofil ausgebildet ist.

4. Beleuchtungseinrichtung nach einem der Ansprüche 1 bis 3, dadurch gekennzeichnet, daß der wenigstens eine Reflektor (26) am Gehäuseteil (20) über eine Verstelleinrichtung verstellbar gelagert ist, die ein außerhalb des Gehäuseteils (20) angeordnetes Betätigungselement (48) aufweist, das außerhalb der Vertiefung (14) angeordnet ist.

5. Beleuchtungseinrichtung nach einem der vorstehenden Ansprüche, dadurch gekennzeichnet, daß diese am Frontteil (16) vormontierbar ist und daß das Frontteil (16) am die Vertiefung (14) aufweisenden Fahrzeugteil (10) befestigbar ist, wobei bei der Montage des Frontteils (16) am Fahrzeugteil (10) der rückseitige Rand (30) des Gehäuseteils (20) in die Vertiefung (14) eintaucht.

## Claims

1. Lighting device in a vehicle, having at least one refractor (26) and at least one light source (28), which are at least partly enclosed by a housing part (20) which has on its front side a light exit opening (22) which is closed by a transparent covering pane (24), it being possible for the housing part (20) to be fastened to a front part (16) of the vehicle, characterized in that the housing part (20) is designed like a frame and, on its rear side opposite the covering pane (24), is designed to be open, in that a vehicle part (10) has a pot-like recess (14) into which the housing part (20) can be inserted by its rear edge (30), and in that, between the outer circumference of the housing part (20) and the inner circumference of the recess (14), there is clamped a sealing element (54) which can be deformed elastically transverse to the insertion direction (12) of the housing part (20), so that a sealed internal space (58) is formed which is bounded by the covering pane (24), the housing part (20) and the recess (14), and in which the at least one refractor (26) and the at least one light source (28) are arranged.

2. Lighting device according to Claim 1, characterized in that the sealing element (54) is plugged onto the rear edge (30) of the housing part (20).

3. Lighting device according to Claim 1 or 2, characterized in that the sealing element (54) is designed as a hollow profile.

4. Lighting device according to one of Claims 1 to 3, characterized in that the at least one refractor (26) is mounted on the housing part (20) such that it can be adjusted by an adjusting device, which has an operating element (48) which is arranged outside the housing part (20) and outside the recess (14).

5. Lighting device according to one of the preceding claims, characterized in that this can be preinstalled on the front part (16), and in that the front part (16) can be fastened to the vehicle part (10) having the recess (14), the rear edge (30) of the housing part (20) entering the recess (14) as the front part (16) is installed on the vehicle part (10).

## Revendications

1. Dispositif d'éclairage dans un véhicule avec au moins un réflecteur (26)) et au moins une source de lumière (28) qui sont entourés au moins en partie par une pièce de boîtier (20 qui présente sur son côté avant une ouverture de sortie (22) pour la lumière qui est fermée par une glace de recouvrement transparente (24), la pièce de boîtier pouvant être fixée sur une partie frontale (16) du véhicule,
caractérisé en ce que
- la pièce de boîtier (20) est constituée en forme de cadre et est constituée de façon ouverte sur son côté arrière, situé en regard de la glace de recouvrement (24),
- une partie (10) du véhicule présente un renfoncement (14) en forme de pot, dans lequel on peut enfoncer la pièce de boîtier (20) par son bord (30) situé du côté arrière et,
- entre le pourtour extérieur de la pièce de boîtier (20) et le pourtour intérieur du renfoncement (14), on insère un élément d'étanchéité (54) déformable de façon élastique perpendiculairement au sens d'enfoncement (12) de la pièce de boîtier (20), de telle sorte que soit formé un volume intérieur (58), fermé, délimité par la glace de recouvrement (24) la pièce de boîtier (20) et le renfoncement (14), volume intérieur dans lequel l'un au moins des réflecteurs (26) et l'une au moins des sources de lumière (28) sont disposés.

2. Dispositif d'éclairage selon la revendication 1,
caractérisé en ce que
l'élément d'étanchéité (54) est mis sur le bord (30) situé du côté arrière de la pièce de boîtier (20).

3. Dispositif d'éclairage selon la revendication 1 ou la revendication 2,
caractérisé en ce que
l'élément d'étanchéité (54) est constitué sous la forme d'un profilé creux.

4. Dispositif d'éclairage selon l'une des revendications 1 à 3,
caractérisé en ce que
au moins l'un des réflecteurs (26) est monté de façon réglable sur la pièce de boîtier (20) au moyen d'un dispositif de réglage qui présente un élément d'actionnement (48), disposé en dehors de la pièce de boîtier (20), lequel élément d'actionnement est disposé en dehors du renfoncement (14).

5. Dispositif d'éclairage selon l'une des revendications précédents,
caractérisé en ce que
- celui-ci peut être déjà monté car la partie frontale (16) et,
- la partie frontale (16) peut être fixée sur la partie (10) du véhicule qui présente le renfoncement (14), le bord (30) situé du côté arrière de la pièce de boîtier (20) plongeant dans le renfoncement (14) lors du montage de la partie frontale (16) sur la partie (10) du véhicule.
